# EUROPEAN PATENT SPECIFICATION

(11) **EP 2 579 473 B1**
(45) Date of publication and mention of the grant of the patent: **17.08.2016**
(21) Application number: 12187182.6
(22) Date of filing: 04.10.2012
(51) Int. Cl.: H04B 7/185

(54) **Aircraft emulation system**
Flugzeugemulationssystem
Système d'émulation d'un aéronef

(30) Priority: 06.10.2011 US 201113267527
(43) Date of publication of application: 10.04.2013
(73) Proprietor: The Boeing Company, Chicago, IL 60606-1596 (US)
(72) Inventor: Mier, David Sam, Mercer Island, WA Washington 98040 (US); Butenko, Richard Bruce, Sammamish, WA Washington 98075 (US); Krzyzewski, Kenneth Casimir, Bellevue, WA Washington 98006 (US); Mitchell, Timothy M., Seattle, WA Washington 98116 (US)
(74) Representative: Hylarides, Paul Jacques

(56) References cited:
- EP-A1- 0 872 973
- EP-A2- 1 426 870
- WO-A1-90/01855
- WO-A1-93/15569

## Description

### BACKGROUND INFORMATION

### 1. Field:

The present disclosure relates generally to aircraft and, in particular, to aircraft network data processing systems. Still more particularly, the present disclosure relates to a method and apparatus for testing communications between aircraft network data processing systems and airport network data processing systems.

### 2. Background:

Aircraft have become more and more sophisticated. Most aircraft have aircraft network data processing systems in which computers and other devices perform various functions during the operation of an aircraft. For example, an aircraft network data processing system may be used to perform navigation functions and may include auto-pilot functions. Further, these aircraft network data processing systems record and store events occurring during the operation of an aircraft.

Aircraft network data processing systems may communicate with other computers located off of an aircraft. For example, an aircraft network data processing system may exchange information with other computers or network data processing systems. This information may include, for example, without limitation, loss of events, data, programs, commands, files, images, and other types of information.

One location in which an aircraft may communicate with another network data processing system is at an airport. The airport may be a commercial airport for passengers, a maintenance location, and/or other suitable types of airports at which aircraft land and take off. At an airport, the aircraft may establish a communications link with an airport network data processing system. This communications link is typically a wireless communications link. One or more computers or other devices on the aircraft network data processing system may then exchange information with one or more computers or other devices in the airport network data processing system.

More and more information is exchanged between computers in aircraft and computers in the airport network data processing system. These communications are used to perform different functions. For example, an aircraft may download logs or other information when arriving at a terminal. As another example, the aircraft may receive software aircraft parts, instructions, notices to airmen (NOTAMs), routing information, and/or other types of information from the airport. This information may be generated by the airport, the airline, a regulatory agency, or other sources.

When new software and/or hardware are designed and manufactured for use in aircraft, testing of these components is performed to ensure that the components provide desired communication with computers in airport network data processing systems. The testing may include installing the new hardware and software in the aircraft. The aircraft is then flown to the airport. Tests of the new hardware and software are then performed. For example, testing may be performed to determine whether hardware and software in the aircraft result in desired communications with the airport network data processing system.

For example, EP 1 426 870 A2 discloses an aircraft having an aircraft mounted computer system connected to various aircraft systems and an aircraft wireless data communication system. The aircraft wireless data communication system may establish a wireless link between the aircraft mounted computer system and a ground-based computer system (GBCS). However, for this system to be tested, the aircraft needs to be physically present at the airport, which may be inconvenient. Other documents are known which discloses test systems, for instance WO 90/01855, which discloses a test system for mobile radio paging. However, no test systems are known which are suited to test a system in an airplane without the mentioned disadvantages.

The use of the aircraft for testing at the airport may be more time consuming, difficult, and expensive than desired. For example, testing using an actual aircraft includes flying the aircraft to the particular airport. This type of testing requires the use of the aircraft, time, and fuel. Additionally, other resources, such as a flight crew to fly the aircraft to the airport for testing, are also necessary to test an aircraft at the airport. Further, when testing the aircraft at a terminal, other aircraft are unable to use the space in which the testing occurs.

Therefore, it would be advantageous to have a method and apparatus that takes into account at least some of the issues discussed above, as well as possibly other issues.

### SUMMARY

In one advantageous embodiment, a mobile aircraft emulation system comprises communications hardware and data processing hardware. The communications hardware is configured for use in an aircraft and to establish a communications link with an airport network data processing system. The data processing hardware is configured for use in the aircraft run a number of software aircraft parts and exchange information with the airport network data processing system using the communications link. The number of software aircraft parts is configured for use in the aircraft.

In another advantageous embodiment, a mobile communications testing system comprises a mobile platform, a structure carried by the mobile platform, an antenna, and a hardware system. The structure is positionable in an orientation substantially similar to when the structure is located on a vehicle. The antenna is connected to the structure such that the antenna has an orientation that substantially corresponds to a particular orientation of a corresponding antenna on the vehicle. The hardware system is configured for use in the vehicle and to establish a communications link with a network data processing system. The hardware system is further configured to emulate information of the vehicle with the network data processing system.

In yet another advantageous embodiment, a method for testing operations performed with an airport network data processing system is provided. A communications link is established between the airport network data processing system and a mobile aircraft emulation system. The mobile aircraft emulation system comprises hardware configured for use in an aircraft that is used for exchanging information with the airport network data processing system. Operations are performed using the communications link in which the operations emulate performance of the operations by the aircraft.

The features, functions, and advantages can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the advantageous embodiments are set forth in the appended claims. The advantageous embodiments, however, as well as a preferred mode of use, further objectives, and advantages thereof will best be understood by reference to the following detailed description of an advantageous embodiment of the present disclosure when read in conjunction with the accompanying drawings, wherein:
**Figure 1** is an illustration of an aircraft communications environment in accordance with an advantageous embodiment;
**Figure 2** is an illustration of aircraft hardware in accordance with an advantageous embodiment;
**Figure 3** is an illustration of a hardware communications system in accordance with an advantageous embodiment;
**Figure 4** is an illustration of a testing system in accordance with an advantageous embodiment;
**Figure 5** is an illustration of components used to position an antenna in accordance with an advantageous embodiment;
**Figure 6** is an illustration of coverage areas in an airport in accordance with an advantageous embodiment;
**Figure 7** is an illustration of a mobile aircraft emulation system in accordance with an advantageous embodiment;
**Figure 8** is an illustration of hardware for a mobile aircraft simulation system in accordance with an advantageous embodiment;
**Figure 9** is an illustration of a flowchart of a process for testing connectivity to an airport network data processing system in accordance with an advantageous embodiment;
**Figure 10** is an illustration of a flowchart of a process for performing operations using a communications link in accordance with an advantageous embodiment;
**Figure 11** is an illustration of a flowchart of a process for performing a data transfer test in accordance with an advantageous embodiment; and
**Figure 12** is an illustration of a data processing system in accordance with an advantageous embodiment.

### DETAILED DESCRIPTION

The different advantageous embodiments recognize and take into account one or more different considerations. For example, the different advantageous embodiments recognize and take into account that another manner in which testing for devices may occur is through simulations in a laboratory. The different advantageous embodiments recognize and take into account that the aircraft and other components may be simulated along with the components for the airport network data processing system at the airport.

The use of simulators may reduce costs, difficulty, and time. The different advantageous embodiments recognize and take into account that these types of simulations, however, may not properly simulate all of the different conditions that may occur when an aircraft communicates with an airport.

The different advantageous embodiments also recognize and take into account that simulation software may be placed on a laptop or other portable computer and taken to an airport for testing. The different advantageous embodiments recognize and take into account, however, that this type of testing may have limited connectivity with the airport network data processing system. The speed or bandwidth for a communications link may be different using a laptop as compared to the aircraft itself. The different advantageous embodiments recognize and take into account that the laptop does not use the same hardware as the aircraft for exchanging information. For example, features such as certificates used to establish communications links, actual software, or aircraft parts may not be used on the laptop. Simulating the functions using a laptop may not result in the laptop performing in the same manner as the aircraft.

For example, the different advantageous embodiments recognize and take into account that simulations in a laboratory and those using a laptop at the airport often do not sufficiently take into account factors such as the antenna for the aircraft. The antenna, the position and the structure on which the antenna is located, and other factors may affect the establishment of a communications link.

Thus, the advantageous embodiments provide a method for emulating an aircraft. In one advantageous embodiment, a mobile aircraft emulation system comprises communications hardware, a number of software aircraft parts, and data processing hardware. The communications hardware is configured for use in an aircraft. The communications hardware is configured to establish a communications link with an airport network data processing system. The data processing hardware is configured for use in the aircraft and configured to run the number of software aircraft parts and exchange information with the airport network data processing system using the communications link.

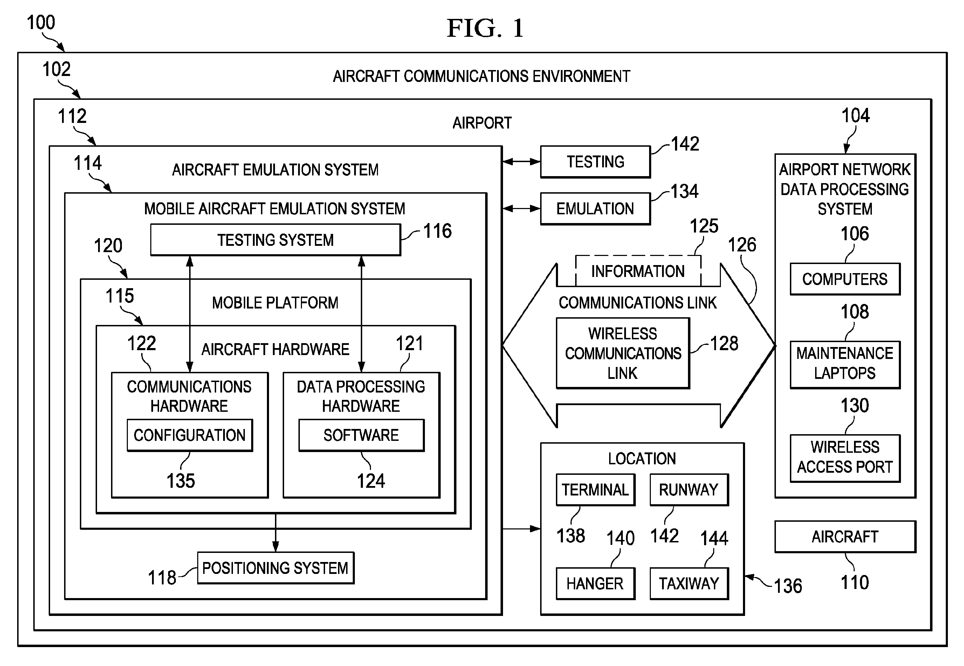

With reference now to the figures and, in particular, with reference now to **Figure 1****,** an illustration of an aircraft communications environment is depicted in accordance with an advantageous embodiment. In this illustrative example, airport **102** is part of aircraft communications environment **100.** Airport **102** has airport network data processing system **104.** Airport network data processing system **104** is comprised of computers **106** that are in communication with each other. Further, one or more of maintenance laptops **108** also may be part of airport network data processing system **104.** Aircraft **110** at airport **102** may communicate with airport network data processing system **104** to perform various functions.

Communications between aircraft **110** and airport network data processing system **104** may be used for different purposes. For example, maintenance log downloads communication between ground users and the aircraft, data uploads, flight plan updates, reports, and other types of data being exchanged. These communications may have a number of different benefits. For example, these communications may be used to coordinate various operations at airport **102.** These operations may include, for example, without limitation, baggage handling, surface vehicle tracking, security operations, and other suitable types of operations.

When aircraft **110** is a new aircraft or if modifications are made to aircraft **110,** testing aircraft **110** is desirable to determine whether aircraft **110** is able to communicate with airport network data processing system **104** in a desired manner. This testing is performed to enable efficient operations at airport **102,** in aircraft **110,** or a combination of the two.

In these illustrative examples, moving aircraft 110 to airport **102** may be unnecessary to perform tests of aircraft **110.** The need for aircraft **110** may be avoided with the use of aircraft emulation system **112.** In the illustrative examples, aircraft emulation system **112** is located at airport **102.**

As depicted, aircraft emulation system **112** takes the form of mobile aircraft emulation system **114.** Mobile aircraft emulation system **114** comprises aircraft hardware 115, testing system **116,** and positioning system **118.**

Aircraft hardware **115** is hardware that is configured for use in aircraft **110.** In other words, aircraft hardware **115** is hardware that is intended for use in aircraft **110** or is actually used in aircraft **110.**

In these depicted examples, aircraft hardware **115** comprises data processing hardware **121** and communications hardware **122.** Data processing hardware **121** is hardware configured for use in aircraft **110.** Data processing hardware **121** is configured to run software **124.**

Software **124** is software configured for use in aircraft **110.** In other words, software **124** is software that is intended for use in aircraft **110.**

Data processing hardware **121** is configured to exchange information **125** with components in airport network data processing system **104** using communications link **126.** Communications link **126** takes the form of wireless communications link **128** in these illustrative examples.

Communications hardware **122** is configured for use in aircraft **110** and is configured to establish wireless communications link **128** with airport network data processing system **104.** Communications hardware **122** establishes wireless communications link **128** with wireless access port **130** in airport network data processing system **104.** In these illustrative examples, data processing hardware **121** exchanges information **125** with airport network data processing system **104.**

Testing system **116** is configured to operate at least one of aircraft hardware **115,** software **124,** and other suitable components. In these illustrative examples, testing system **116** is hardware, software, or a combination of the two.

As used herein, the phrase "at least one of", when used with a list of items, means different combinations of one or more of the listed items may be used and only one of each item in the list may be needed. For example, "at least one of item A, item B, and item C" may include, for example, without limitation, item A, or item A and item B. This example also may include item A, item B, and item C, or item B and item C.

In the illustrative examples, testing system **116** in aircraft emulation system **112** controls the operation of at least one of aircraft hardware **115,** software **124,** and other suitable components to perform emulation **134** of aircraft **110** at airport **102.** Emulation **134** may be performed without needing use of aircraft **110** or moving aircraft **110** to airport **102.**

Positioning system **118** is configured to position at least a portion of communications hardware **122** in configuration **135.** Configuration **135** corresponds to a configuration of communications hardware **122** that would be present on aircraft **110** in actual or intended use.

In this illustrative example, configuration **135** is a position of communications hardware **122.** In particular, the position may be that of communications hardware **122.** In other illustrative examples, configuration **135** may be the position of the hardware on aircraft **110.** The position may be, for example, a height and orientation of communications hardware **122** that substantially corresponds to the height and orientation of communications hardware **122** when communications hardware **122** is on aircraft **110.** For example, configuration **135** may be a position of an antenna that substantially corresponds to the position of the antenna on aircraft **110** when aircraft **110** establishes communications link **126** with airport network data processing system **104.**

For example, the position may include a position of an antenna in communications hardware **122.** The position substantially corresponds to a particular position of a corresponding antenna on aircraft **110.** A corresponding antenna is an antenna that is the same antenna as the antenna in communications hardware **122.** In other words, the antenna in communications hardware **122** may have substantially the same materials, dimensions, and other attributes as the corresponding antenna on aircraft **110.**

At least one of aircraft hardware **115,** testing system **116,** and positioning system **118** is associated with mobile platform **120.** Mobile platform **120** is configured to carry these components. Mobile platform **120** may take a number of different forms. For example, mobile platform **120** may be a vehicle, a cart, a truck, a suitcase, or some other suitable platform.

The association is a physical association in these depicted examples. A first component, aircraft hardware **115,** may be considered to be associated with a second component, mobile platform **120,** by being secured to the second component, bonded to the second component, mounted to the second component, welded to the second component, fastened to the second component, and/or connected to the second component in some other suitable manner. The first component also may be connected to the second component using a third component. The first component may also be considered to be associated with the second component by being formed as part of, and/or an extension of, the second component. As another example, the first component may be associated with the second component by being carried by the second component.

In this manner, mobile aircraft emulation system **114** may be moved to location **136** in airport **102** to perform testing or exchange of information **125** with airport network data processing system **104.** Location **136** may be, for example, a location at airport **102** such as terminal **138,** hanger **140,** runway **142,** taxiway **144,** and/or some other suitable location. Location **136** may even be in the air, such as a location on an approach route or airspace around airport **102.**

In this manner, mobile aircraft emulation system **114** may perform emulation **134** of aircraft **110** in location **136.** Emulation **134** may test the ability of aircraft **110** to exchange information **125** with airport network data processing system **104.** In particular, emulation **134** of aircraft **110** using mobile aircraft emulation system **114** may be used to perform testing of at least one of aircraft **110** and airport network data processing system **104.**

Testing **142** may be performed to determine whether changes to aircraft **110** or the design of aircraft **110** provide a desired level of exchange of information **125** with airport network data processing system **104.** Additionally, changes to airport network data processing system **104** may be tested to determine whether those changes are compatible with aircraft **110.** Also, security of at least one of airport network data processing system **104** and aircraft **110** may be performed.

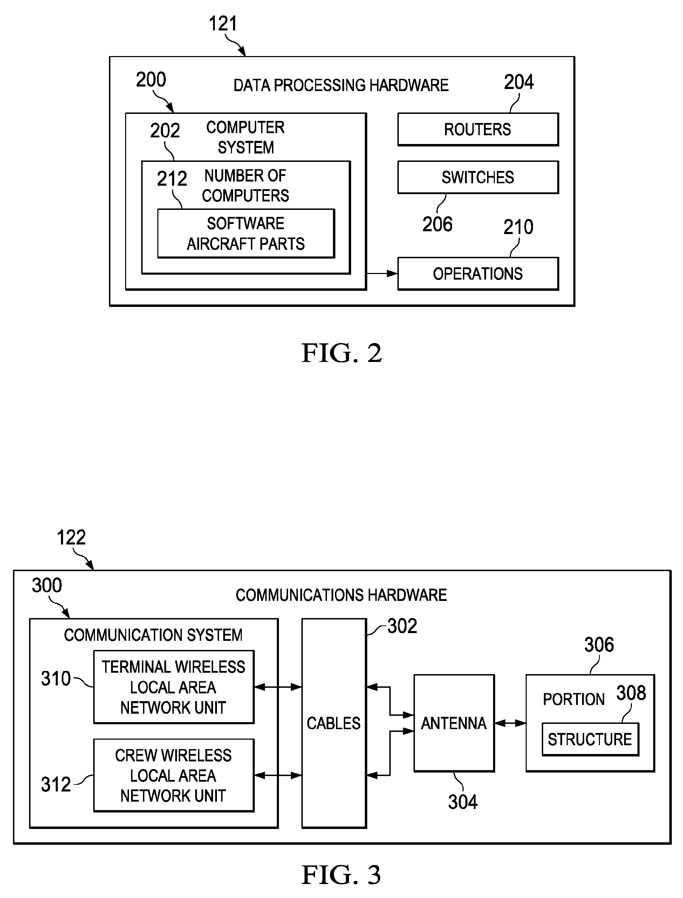

With reference next to **Figure 2****,** an illustration of aircraft hardware is depicted in accordance with an advantageous embodiment. In this illustrative example, data processing hardware **121** includes computer system **200.** Computer system **200** comprises number of computers **202.** "A number", as used herein with reference to items, means one or more items. For example, "number of computers **202"** is one or more computers.

In these illustrative examples, data processing hardware **121** may include other types of hardware in addition to and/or in place of computer system **200.** For example, a circuit system, application specific integrated circuits, programmable logic devices, and/or other suitable types of hardware may be present in aircraft hardware **115** that may be configured for use in aircraft **110** shown in block form in **Figure 1****.** As another example, data processing hardware **121** also may include routers **204,** switches **206,** and/or other components that may provide for communication between computers in number of computers **202** in computer system **200.**

Computer system **200** is configured to perform operations **210.** Operations **210** are performed using software aircraft parts **212.** Software aircraft parts **212** are examples of software **124** in **Figure 1****.**

Software aircraft parts **212** are software aircraft parts that are configured for use in aircraft **110.** In being configured for use with aircraft **110,** these components are the actual components that may be used in aircraft **110.**

Software aircraft parts **212** may include various software aircraft parts that may be found on aircraft **110.** In these illustrative examples, software aircraft parts **212** may include an onboard maintenance system application, a time manager application, a network server crossover interface, a flight-input data-output function, an onboard data load function, an electronic flight bag data manager, a terminal wireless local area network unit gate link authenticator, a wireless uplink and downlink diagnostics manager, a health manager, an onboard maintenance system, a support and maintenance system manager, a flight-input data-output diagnostic manager, and/or a time manager.

Operations **210** may include at least one of sending data, receiving data, authenticating with airport network data processing system **104,** communicating with a maintenance laptop in maintenance laptops **108,** loading software aircraft parts **212,** configuring parameters to test software aircraft part functionality, and other suitable operations.

With reference now to **Figure 3****,** an illustration of a hardware communications system is depicted in accordance with an advantageous embodiment. In this illustrative example, one implementation for communications hardware **122** shown in block form in **Figure 1** is depicted.

In this particular example, communications hardware **122** comprises communication system **300,** cables **302,** antenna **304,** portion **306** of structure **308,** and other suitable components.

Communications hardware **122** comprises hardware used to facilitate communications for data processing hardware **121** over wireless communications link **128** in **Figure 1****.** In this illustrative example, communication system **300** comprises at least one of terminal wireless local area network unit (TWLU) **310** and crew wireless local area network unit (CWLU) **312.**

Terminal wireless local area network unit **310** is a hardware component that is configured to communicate with airport network data processing system **104** in **Figure 1****.** In these illustrative examples, this component functions as a wireless access bridge between aircraft hardware **115** and airport network data processing system **104.** This component may be used for functions such as "gate link" functions.

Terminal wireless local area network unit **310** may also receive uplink data from computers **106** in airport network data processing system **104.** The uplink data may include, for example, without limitation, loadable software airplane parts and airplane modifiable information.

Terminal wireless local area network unit **310** also may send downlink data to computers **106** in airport network data processing system **104.** This downlink data may include, for example, aircraft log files, certificate signing requests, engine data, and other suitable information.

Crew wireless local area network unit **312** acts as a wireless access bridge between aircraft hardware **115** and airport network data processing system **104.** This component may be used in establishing communications link **126** with computer systems in airport network data processing system **104** used for maintenance operations at airport **102.**

Crew wireless local area network unit **312** also may be used to load software airplane parts and airplane modifiable information. This component may be used to send and receive the same data as terminal wireless local area network unit **310** with maintenance laptops **108** in airport network data processing system **104.**

Cables **302** are cables that connect components to each other. For example, cables **302** connect terminal wireless local area network unit **310** and crew wireless local area network unit **312** to antenna **304.** Cables **302** also connect terminal wireless local area network unit **310** and crew wireless local area network unit **312** to data processing hardware **121** (not shown) in **Figure 1****.**

Antenna **304** is an antenna that is configured to be used in aircraft **110.** Structure **308** is a structure on which antenna **304** is mounted on aircraft **110.**

Structure **308** is used when structure **308** affects the performance of antenna **304.** For example, if antenna **304** is a monopole antenna, the absence of structure **308** may affect performance of antenna **304.** In these examples, only portion **306** of structure **308** that affects the performance of antenna **304** may be needed in communications hardware **122.** Structure **308** may be, for example, a skin panel, a faring, or some other suitable type of structure.

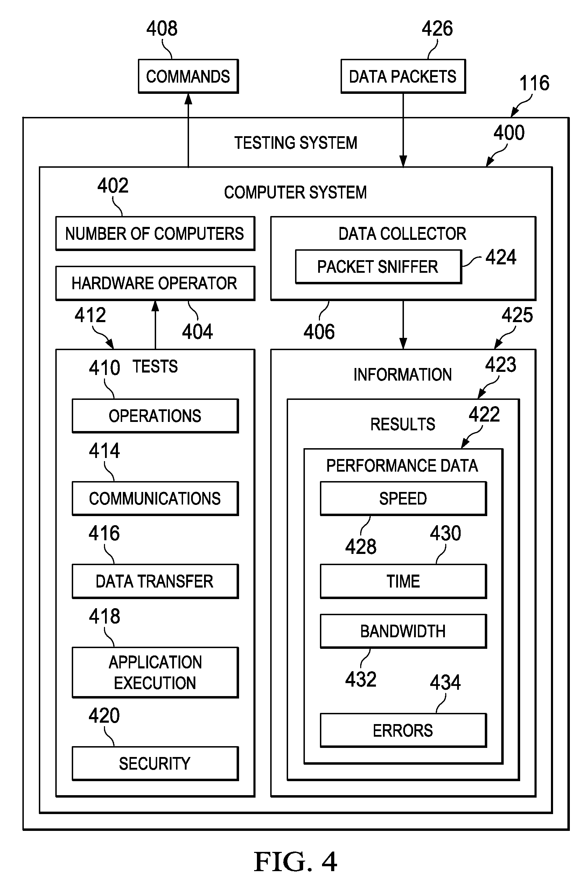

With reference now to **Figure 4****,** an illustration of a testing system is depicted in accordance with an advantageous embodiment. An illustration of components that may be used to implement testing system **116** shown in block form in **Figure 1** is depicted. Testing system **116** may be implemented using computer system **400.** Computer system **400** may comprise number of computers **402.**

Hardware operator **404** and data collector **406** may be implemented in computer system **400.** These two components may be implemented using hardware, software, or a combination of the two.

Hardware operator **404** is configured to operate aircraft hardware **115** in **Figure 1****.** For example, hardware operator **404** may send commands **408** to data processing hardware **121** in **Figure 1****.** In particular, hardware operator **404** may identify operations **410** to be performed by data processing hardware **121.** Operations **410** may be performed for tests **412.** Operations **410** may include operations **210** shown in block form in **Figure 2****.**

Tests **412** are configured to test the performance of aircraft hardware **115.** In particular, the performance of aircraft hardware **115** may be tested with respect to establishing wireless communications link **128** and exchanging information **125** using wireless communications link **128** in **Figure 1****.** Additionally, tests **412** also may include tests to identify how well data processing hardware **121** processes information **125.**

These tests may include, for example, without limitation, at least one of tests for communications **414,** data transfer **416,** application execution **418,** security **420,** and other suitable types of tests. Communications **414** may test the ability of aircraft hardware **115** to establish wireless communications link **128** with airport network data processing system **104.** This test, for example, without limitation, includes contacting wireless access port **130,** authenticating aircraft hardware **115** with airport network data processing system **104,** and other suitable types of operations.

Data transfer **416** may test the ability of aircraft hardware **115** to transfer information **125** over wireless communications link **128.** This transfer may include downloading data, uploading data, or a combination of the two. This test may include data transfers such as flight data downloading, maintenance downloading, chart updates, aircraft documentation uploads, pre-flight data uplinking, downloading engine trending information, video server uploads, in-flight entertainment content uploads, fuel data transfer, software aircraft part uploads, voice over internet protocol (VoIP) communications, point of sale transactions, and other suitable types of data transfers.

Application execution **418** may test the execution of software aircraft parts **212** by data processing hardware **121** in aircraft hardware **115.** For example, application execution **418** may be used to determine whether software aircraft parts **212** perform as desired when information **125** is exchanged with airport network data processing system **104.**

Security **420** may be used to test the security of aircraft hardware **115** in aircraft **110,** airport network data processing system **104** at airport **102,** or a combination of the two. Security **420** may be used to determine whether security issues are present in establishing wireless communications link **128** and during transfer of information **125** between aircraft hardware **115** and airport network data processing system **104.** For example, this test may determine whether security keys or certificates become vulnerable during establishment of wireless communications link **128,** transfer of information **125,** or a combination of the two. Further, security **420** may be used to determine whether encryption of information **125** by at least one of aircraft hardware **115** and airport network data processing system **104** meets desired standards for encrypting data.

Data collector **406** may collect performance data **422.** In these illustrative examples, performance data **422** may be results **423** from performing tests **412.**

Performance data **422** may be obtained during performance of tests **412.** In these illustrative examples, data collector **406** collects performance data **422** in a passive manner. In other words, additional code or instructions are not included in software aircraft parts **212** in an effort to reduce increases in time and other types of perturbations that may occur from altering software aircraft parts **212.** For example, without limitation, data collector **406** may be implemented using a packet sniffer **424** that examines data packets **426** in information **425.**

Performance data **422** may include, for example, at least one of speed **428,** time **430,** bandwidth **432,** errors **434,** and other suitable types of metrics used to identify the performance of aircraft hardware **115,** software aircraft parts **212,** and other suitable components. Speed **428** may be the speed at which information **425** is transferred over wireless communications link **128.** Time **430** may be the time that software aircraft parts **212** takes to perform different operations.

Bandwidth **432** may identify the amount of bandwidth used to transfer information **125.** Errors **434** may identify errors that occur during performance of operations **410.** Errors **434** may include errors in at least one of error in transferring information **125,** performing operations using software aircraft parts **212,** and other suitable types of errors.

For example, performance data **422** also may include data about the performance of airport network data processing system **104.**

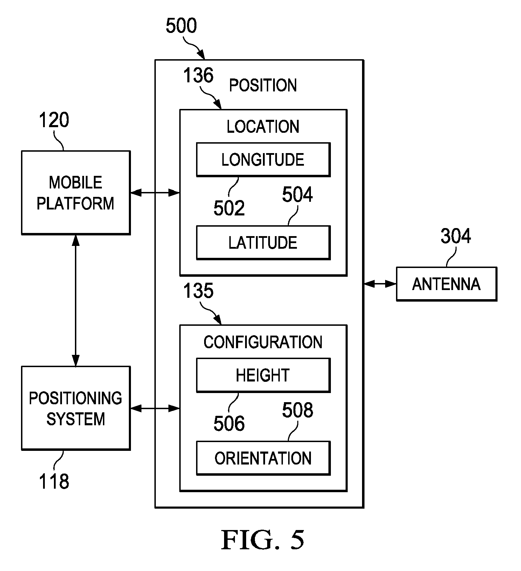

With reference now to **Figure 5****,** an illustration of components used to position an antenna is depicted in accordance with an advantageous embodiment. Antenna **304** is placed into position **500,** mobile platform **120,** and positioning system **118.** Mobile platform **120** places antenna **304** shown in block form in **Figure 3** in location **136** at airport **102** shown in block form in **Figure 1****.** Positioning system **118** positions antenna **304** into configuration **135.**

Position 500 comprises location **136** and configuration **135.** As depicted, location **136** is described using longitude **502** and latitude **504.** In this illustrative example, configuration **135** of antenna **304** includes height **506** and orientation **508.** Height **506** is substantially the same height as when antenna **304** is used on aircraft **110.** Orientation **508** is substantially the same orientation for a corresponding antenna to antenna **304** used on aircraft **110.** In other words, antenna **304** is positionable, such as in orientation **508,** which is substantially similar when antenna **304** is used on aircraft **110.**

The illustration of aircraft communications environment **100** and example implementations for different components in **Figures 1-5** are not meant to imply a physical or architectural limitation to the manner in which an advantageous embodiment may be implemented. Other components in addition to and/or in place of the ones illustrated may be used. Some components may be unnecessary. Also, the blocks are presented to illustrate some functional components. One or more of these blocks may be combined and/or divided into different blocks when implemented in an advantageous embodiment.

For example, in other illustrative examples, communications hardware **122** may include one or more antennas in addition to antenna **304.** In still other illustrative examples, one or more of the different advantageous embodiments may be applied to communications environments other than aircraft communications environment **100.** For example, one or more of the different advantageous embodiments may be applied to a vehicle communications environment for other types of vehicles instead of aircraft **110.** For example, the different advantageous embodiments may be applied to vehicles such as a surface ship, a tank, a personnel carrier, a train, a spacecraft, a submarine, a bus, an automobile, and other suitable types of vehicles.

The infrastructure to which the vehicle communicates may be to an infrastructure other than airport **102** with airport network data processing system **104.** For example, with a train, communications may be tested between a train and a train station. For a surface ship, communications may be tested between the surface ship and a port or dock area.

As another example, the illustration of the components in testing system **116** is not meant to limit the manner in which testing system **116** may be implemented. For example, other types of tests may be used in addition to and/or in place of the ones depicted in tests **412.** For example, tests **412** may include performance tests for data processing hardware **121,** software aircraft parts **212,** or a combination of the two.

When an aircraft is designed to communicate with an airport network data processing system, determining whether the aircraft can communicate with the airport network data processing system in a desired manner within coverage areas is desirable. For example, coverage areas may include terminals, hangers, tarmacs, taxiways, and other locations.

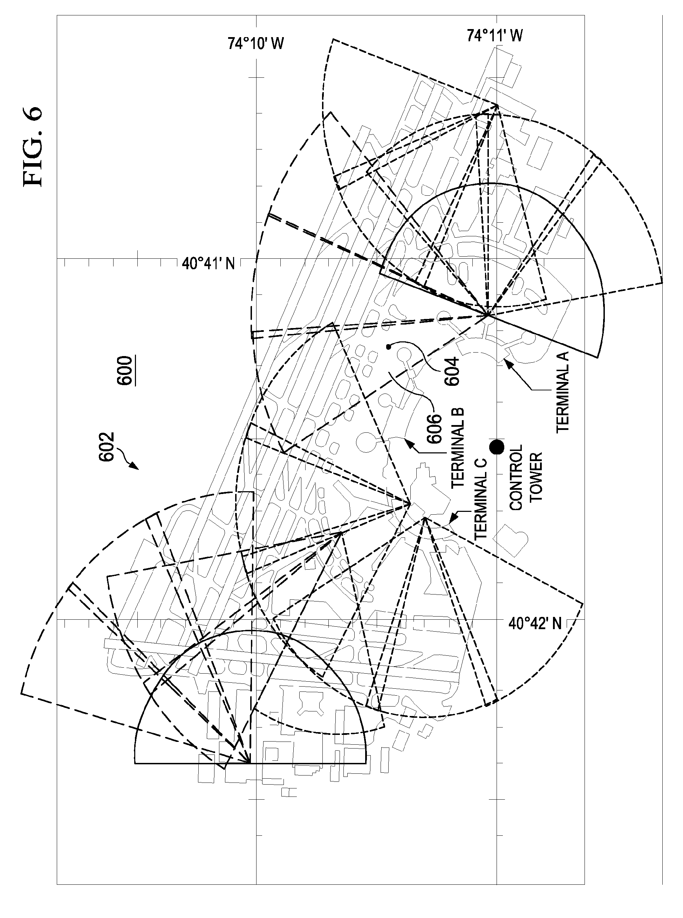

With reference now to **Figure 6****,** an illustration of coverage areas in an airport is depicted in accordance with an advantageous embodiment. In this illustrative example, airport **600** is an example of an implementation for airport **102** shown in block form in **Figure 1****.** In this illustrative example, coverage areas **602** are illustrated for airport **600.** Coverage areas **602** are areas in which an aircraft may establish a communications link with an airport network data processing system, such as airport network data processing system **104,** at airport **600.**

In these illustrative examples, testing of communications with the airport network data processing system in these different coverage areas may be performed without needing an actual aircraft.

For example, an aircraft emulation system, such as aircraft emulation system **112,** may be moved to location **604.** At location **604,** aircraft emulation system **112** should be able to communicate with the airport network data processing system for airport **600** in a desired manner within coverage area **606.** With an aircraft emulation system in accordance with an advantageous embodiment, various tests may be performed to emulate the aircraft at location **604** without needing the use of an aircraft.

Further, moving the aircraft emulation system to different locations for other coverage areas in coverage areas **602** may be more easily performed as compared to using an actual aircraft. In this manner, testing of an ability to establish communications links may be made to determine whether a particular aircraft is able to communicate with the airport network data processing system at airport **600** in different locations at airport **600.**

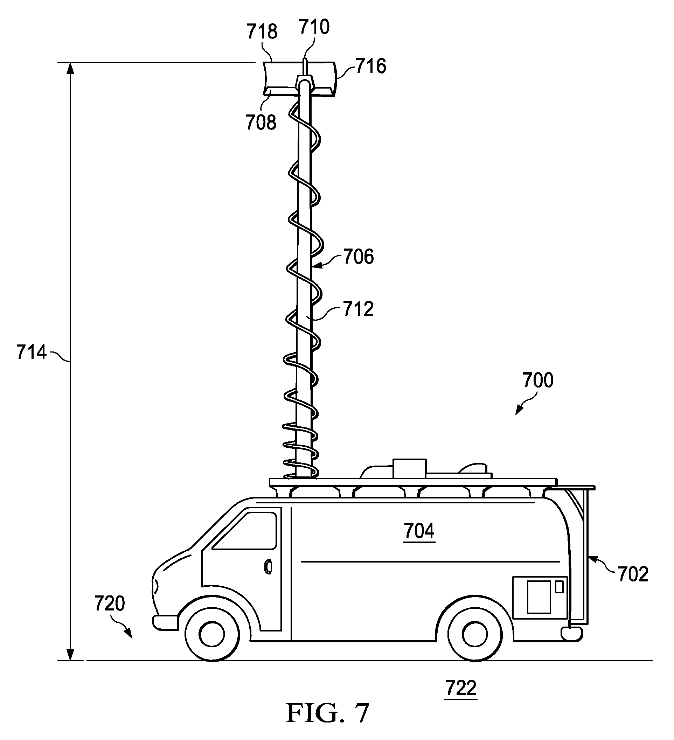

Turning now to **Figure 7****,** an illustration of a mobile aircraft emulation system is depicted in accordance with an advantageous embodiment. In this illustrative example, mobile aircraft emulation system **700** is an example of one implementation for mobile aircraft emulation system **114** shown in block form in **Figure 1****.**

In this depicted example, mobile aircraft emulation system **700** comprises mobile platform **702.** Mobile platform **702** takes the form of vehicle **704** in this depicted example. Data processing hardware and some communications hardware are located inside of vehicle **704.** In this illustrative example, a portion of the communications hardware is attached to the exterior of vehicle **704.** In this illustrative example, configuration **706** and structure **708** with antenna **710** are located outside of vehicle **704.** Configuration **706** takes the form of mast **712.**

Mast **712** is an extendable mast that may extend and retract to change height **714** of antenna **710.** In these illustrative examples, antenna **710** and structure **708** are in position **716.** Position **716** corresponds to a position of antenna **710** on structure **708** when used on an aircraft. In these illustrative examples, the position includes height **714** and orientation **718.**

In these illustrative examples, mobile aircraft emulation system **700** is at location **720** at airport **722.** In this manner, position **716** also includes location **720.**

In this manner, emulation of the aircraft may be more accurate with the use of the actual antenna and the structure to which the antenna is connected to on the aircraft. Further, with height **714,** location **720,** and orientation **718,** emulation of the aircraft may be more accurately made.

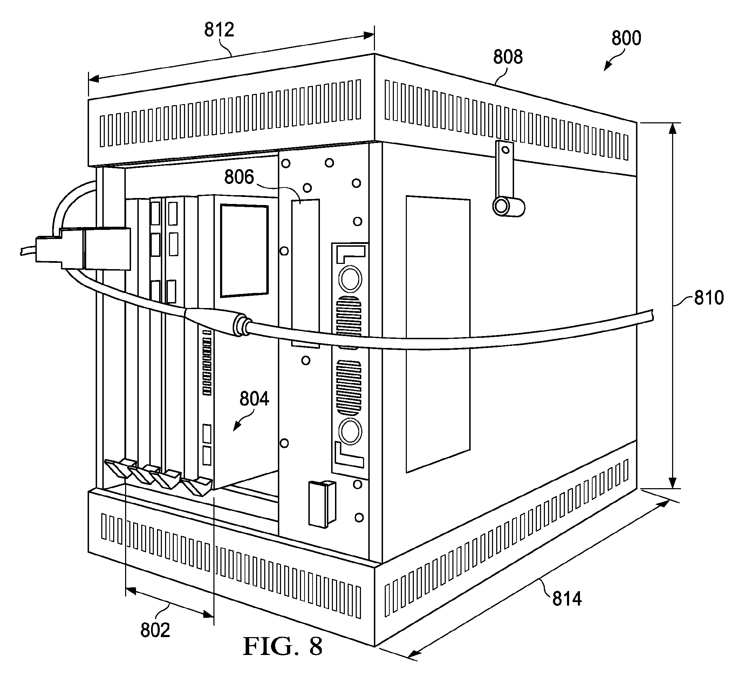

Turning next to **Figure 8****,** an illustration of hardware for a mobile aircraft simulation system is depicted in accordance with an advantageous embodiment. Hardware **800** is an example of aircraft hardware **115** shown in block form in **Figure 1****.** Hardware **800** is an example of hardware that may be used in mobile aircraft emulation system **700** in **Figure 7****.** In particular, hardware **800** may be located inside mobile platform **702** in **Figure 7** in this illustrative example. In this illustrative example, hardware **800** comprises data processing hardware **802,** testing system **804,** and communications system **806.**

These components are located in frame **808.** In this illustrative example, frame **808** has height **810,** width **812,** and depth **814.** Height **810** is about 12 inches, width **812** is about 16 inches, and depth **814** is about 18 inches. Frame **808** may be placed inside of vehicle **704** in **Figure 7****.**

The different components illustrated in **Figures 7** and **8** may be combined with components in **Figures 1-5****,** used with components in **Figures 1-5****,** or a combination of the two. Additionally, some of the components in these figures may be illustrative examples of how components shown in block form in **Figures 1-5** may be implemented as physical structures.

Further, the illustration of components in these figures are not meant to imply limitations to the manner in which other advantageous embodiments may be implemented. For example, in some advantageous embodiments, the mobile platform may be a cart with a mast. In still other advantageous embodiments, the mobile platform may be a suitcase and the configuration may be moved independently of the suitcase.

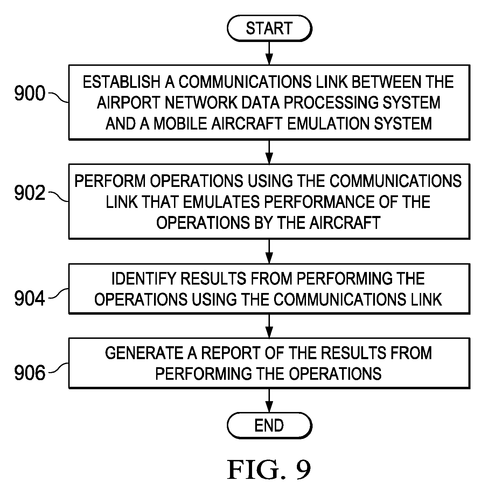

With reference now to **Figure 9****,** an illustration of a flowchart of a process for testing connectivity to an airport network data processing system is depicted in accordance with an advantageous embodiment. The process illustrated in **Figure 9** may be implemented in aircraft communications environment **100** in **Figure 1****.** These different operations may be performed using hardware such as the hardware components found in aircraft emulation system **112** shown in block form in **Figure 1****.**

The process begins by establishing a communications link between the airport network data processing system and a mobile aircraft emulation system (operation **900).** The mobile aircraft emulation system may be mobile aircraft emulation system **114** in **Figure 1****.** The process then performs operations using the communications link that emulates performance of the operations by the aircraft (operation **902).** These operations may be operations **410** performed for one or more of tests **412** shown in block form in **Figure 4****.** The process then identifies results from performing the operations using the communications link (operation **904).** The process then generates a report of the results from performing the operations (operation **906),** with the process terminating thereafter.

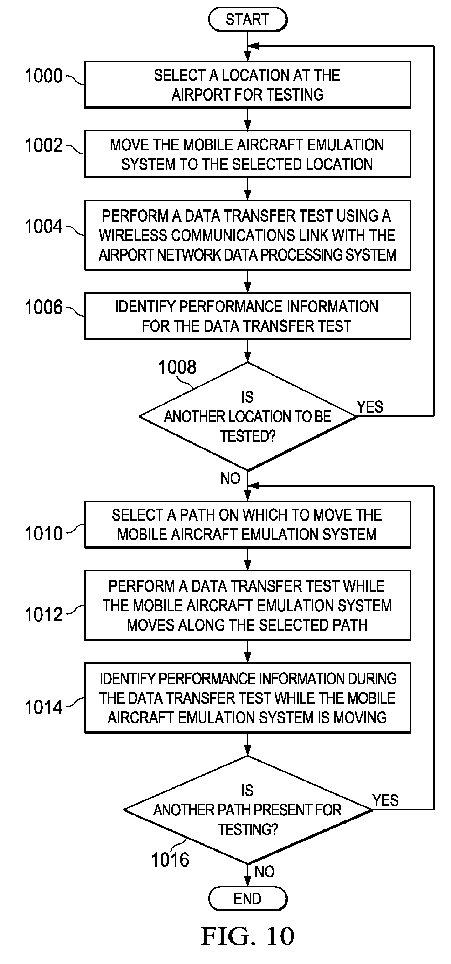

Turning next to **Figure 10****,** an illustration of a flowchart of a process for performing operations using a communications link is depicted in accordance with an advantageous embodiment. In this illustrative example, the different operations in **Figure 10** may be an example of an implementation for operation **902** in **Figure 9****.**

The process begins by selecting a location at the airport for testing (operation **1000).** This location may be, for example, without limitation, a gate, a hanger, a runway, a maintenance facility, a taxiway, or some other suitable location at which a communications link should be established with an airport network data processing system. The process then moves the mobile aircraft emulation system to the selected location (operation **1002).**

The process then performs a data transfer test using a wireless communications link with the airport network data processing system (operation **1004).** The process identifies performance information for the data transfer test (operation **1006).** The performance information includes any information that may be used in determining whether the operations have been performed in a desired manner. The performance information may include, for example, at least one of data transfer rates, file transfer times, bandwidth usage, errors, and other suitable parameters.

The process then determines whether another location is to be tested (operation **1008).** If another location is to be tested, the process returns to operation **1000.**

Otherwise, the process selects a path on which to move the mobile aircraft emulation system (operation **1010).** This path may be, for example, a path taken by an aircraft when moving from a runway to a gate, a path taken by an aircraft to move to a hanger or maintenance facility, or some other suitable path. The process then performs a data transfer test while the mobile aircraft emulation system moves along the selected path (operation **1012).**

The process identifies performance information during the data transfer test while the mobile aircraft emulation system is moving (operation **1014).** Thereafter, a determination is made as to whether another path is present for testing (operation **1016).** If another path is present, the process returns to operation **1010.** Otherwise, the process terminates.

With the performance information generated in operation **1006** and operation **1014,** an analysis may be made as to whether the communications operations have been performed at a desired level. With this analysis, adjustments or changes to at least one of aircraft hardware **115,** software **124,** and airport network data processing system **104** shown in block form in **Figure 1** may be identified if the communications operations are not performed at a desired level.

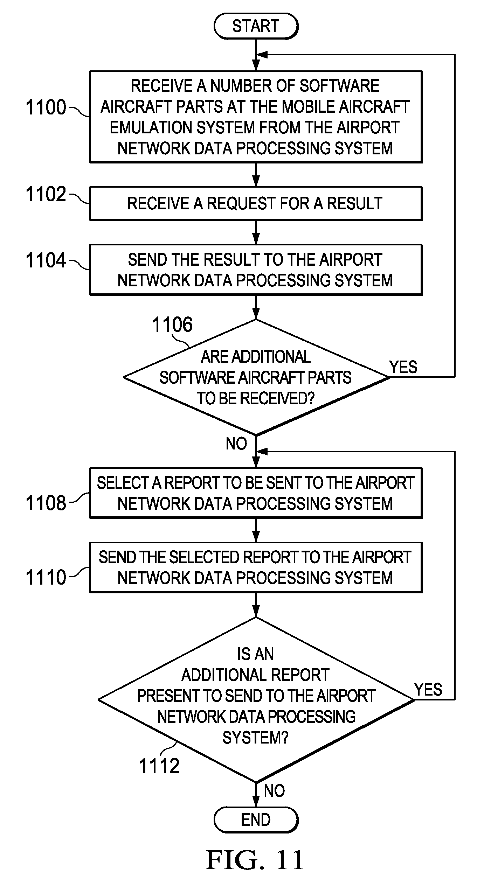

Turning now to **Figure 11****,** an illustration of a flowchart of a process for performing a data transfer test is depicted in accordance with an advantageous embodiment. The operations illustrated in **Figure 11** are an example of one manner in which the data transfer test in operation **1004** and in operation **1012** may be performed. These operations may be performed using testing system **116** shown in block form in **Figure 1****.** Alternatively, this process also may be performed by airport network data processing system **104.**

The process begins by receiving a number of software aircraft parts at the mobile aircraft emulation system from the airport network data processing system (operation **1100).** In these illustrative examples, the software aircraft parts are software aircraft parts that are configured for use by the aircraft hardware for the aircraft that is emulated by the mobile aircraft emulation system. The process then receives a request for a result (operation **1102).** The result may be, for example, a configuration report regarding the processing of the software aircraft parts. The result also may include a log or any other suitable information. The process then sends the result to the airport network data processing system (operation **1104).**

A determination is made as to whether additional software aircraft parts are to be received (operation **1106).** If additional software parts to be received, the process returns to operation **1100.**

Otherwise, the process selects a report to be sent to the airport network data processing system (operation **1108).** The process sends the selected report to the airport network data processing system (operation **1110).** This report may be, for example, a log or some other test file containing information that may be sent when an aircraft communicates with the airport network data processing system. A determination is made as to whether an additional report is present to send to the airport network data processing system (operation **1112).** If an additional report is present, the process returns to operation **1108.** Otherwise, the process terminates.

The illustration of operations for a data transfer test in **Figure 11** is only meant to be an example of one manner in which a data transfer test may be implemented. In the illustrative examples, a data transfer test is selected to emulate the type of data transfer that occurs during communication operations between an aircraft and an airport network data processing system. Other types of data transfer tests may be used depending on the particular implementation.

The flowcharts and block diagrams in the different depicted embodiments illustrate the architecture, functionality, and operation of some possible implementations of apparatuses and methods in an advantageous embodiment. In this regard, each block in the flowcharts or block diagrams may represent a module, segment, function, and/or a portion of an operation or step. For example, one or more of the blocks may be implemented as program code, in hardware, or a combination of the program code and hardware. When implemented in hardware, the hardware may, for example, take the form of integrated circuits that are manufactured or configured to perform one or more operations in the flowcharts or block diagrams.

In some alternative implementations of an advantageous embodiment, the function or functions noted in the block may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram.

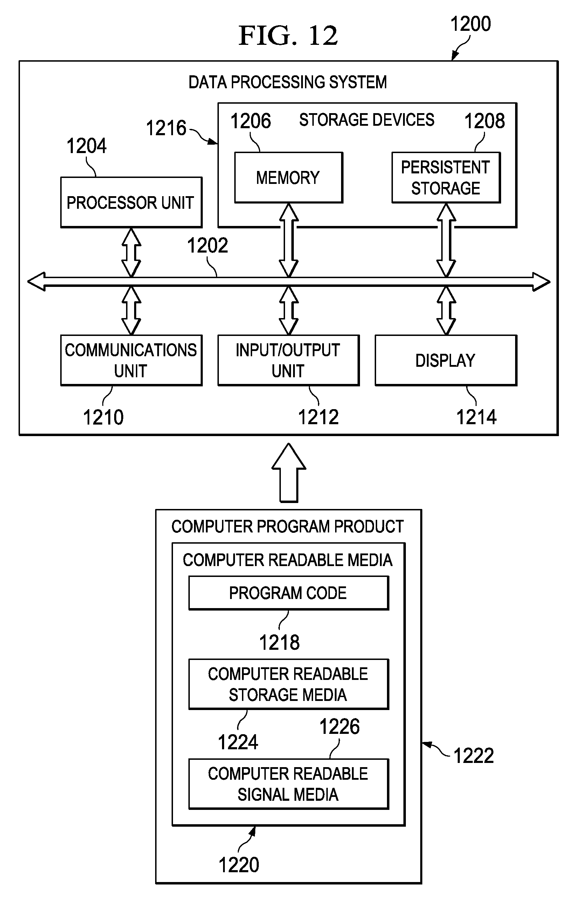

Turning now to **Figure 12****,** an illustration of a data processing system is depicted in accordance with an advantageous embodiment. Data processing system **1200** may be used to implement one or more computers in testing system **116,** data processing hardware **121,** and communications hardware **122** shown in block form in **Figure 1****.** In this illustrative example, data processing system **1200** includes communications framework **1202,** which provides communications between processor unit **1204,** memory **1206,** persistent storage **1208,** communications unit **1210,** input/output (I/O) unit **1212,** and display **1214.**

Processor unit **1204** serves to execute instructions for software that may be loaded into memory **1206.** Processor unit **1204** may be a number of processors, a multi-processor core, or some other type of processor, depending on the particular implementation. "A number", as used herein with reference to an item, means one or more items. Further, processor unit **1204** may be implemented using a number of heterogeneous processor systems in which a main processor is present with secondary processors on a single chip. As another illustrative example, processor unit **1204** may be a symmetric multi-processor system containing multiple processors of the same type.

Memory **1206** and persistent storage **1208** are examples of storage devices **1216.** A storage device is any piece of hardware that is capable of storing information, such as, for example, without limitation, data, program code in functional form, and other suitable information either on a temporary basis and/or a permanent basis. Storage devices **1216** also may be referred to as computer readable storage devices in these examples. Memory **1206,** in these examples, may be, for example, a random access memory or any other suitable volatile or non-volatile storage device. Persistent storage **1208** may take various forms, depending on the particular implementation.

For example, persistent storage **1208** may contain one or more components or devices. For example, persistent storage **1208** may be a hard drive, a flash memory, a rewritable optical disk, a rewritable magnetic tape, or some combination of the above. The media used by persistent storage **1208** also may be removable. For example, a removable hard drive may be used for persistent storage **1208.**

Communications unit **1210,** in these examples, provides for communications with other data processing systems or devices. In these examples, communications unit **1210** is a network interface card. Communications unit **1210** may provide communications through the use of either or both physical and wireless communications links.

Input/output unit **1212** allows for input and output of data with other devices that may be connected to data processing system **1200.** For example, input/output unit **1212** may provide a connection for user input through a keyboard, a mouse, and/or some other suitable input device. Further, input/output unit **1212** may send output to a printer. Display **1214** provides a mechanism to display information to a user.

Instructions for the operating system, applications, and/or programs may be located in storage devices **1216,** which are in communication with processor unit **1204** through communications framework **1202.** In these illustrative examples, the instructions are in a functional form on persistent storage **1208.** These instructions may be loaded into memory **1206** for execution by processor unit **1204.** The processes of the different embodiments may be performed by processor unit **1204** using computer implemented instructions, which may be located in a memory, such as memory **1206.**

These instructions are referred to as program code, computer usable program code, or computer readable program code that may be read and executed by a processor in processor unit **1204.** The program code in the different embodiments may be embodied on different physical or computer readable storage media, such as memory **1206** or persistent storage **1208.**

Program code **1218** is located in a functional form on computer readable media **1220** that is selectively removable and may be loaded onto or transferred to data processing system **1200** for execution by processor unit **1204.** Program code **1218** and computer readable media **1220** form computer program product **1222** in these examples. In one example, computer readable media **1220** may be computer readable storage media **1224** or computer readable signal media **1226.** Computer readable storage media **1224** may include, for example, an optical or magnetic disk that is inserted or placed into a drive or other device that is part of persistent storage **1208** for transfer onto a storage device, such as a hard drive, that is part of persistent storage **1208.** Computer readable storage media **1224** also may take the form of a persistent storage, such as a hard drive, a thumb drive, or a flash memory, that is connected to data processing system **1200.** In some instances, computer readable storage media **1224** may not be removable from data processing system **1200.** In these examples, computer readable storage media **1224** is a physical or tangible storage device used to store program code **1218** rather than a medium that propagates or transmits program code **1218.** Computer readable storage media **1224** is also referred to as a computer readable tangible storage device or a computer readable physical storage device. In other words, computer readable storage media **1224** is media that can be touched by a person.

Alternatively, program code **1218** may be transferred to data processing system **1200** using computer readable signal media **1226.** Computer readable signal media 1226 may be, for example, a propagated data signal containing program code **1218.** For example, computer readable signal media **1226** may be an electromagnetic signal, an optical signal, and/or any other suitable type of signal. These signals may be transmitted over communications links, such as wireless communications links, optical fiber cable, coaxial cable, a wire, and/or any other suitable type of communications link. In other words, the communications link and/or the connection may be physical or wireless in the illustrative examples.

In some advantageous embodiments, program code 1218 may be downloaded over a network to persistent storage 1208 from another device or data processing system through computer readable signal media **1226** for use within data processing system **1200.** For instance, a program code stored in a computer readable storage medium in a server data processing system may be downloaded over a network from the server to data processing system **1200.** The data processing system providing program code **1218** may be a server computer, a client computer, or some other device capable of storing and transmitting program code **1218.**

The different components illustrated for data processing system **1200** are not meant to provide architectural limitations to the manner in which different embodiments may be implemented. The different advantageous embodiments may be implemented in a data processing system including components in addition to or in place of those illustrated for data processing system **1200.** Other components shown in **Figure 12** can be varied from the illustrative examples shown. The different embodiments may be implemented using any hardware device or system capable of running program code. As one example, the data processing system may include organic components integrated with inorganic components and/or may be comprised entirely of organic components excluding a human being. For example, a storage device may be comprised of an organic semiconductor.

In another illustrative example, processor unit **1204** may take the form of a hardware unit that has circuits that are manufactured or configured for a particular use. This type of hardware may perform operations without needing a program code to be loaded into a memory from a storage device to be configured to perform the operations.

For example, when processor unit **1204** takes the form of a hardware unit, processor unit **1204** may be a circuit system, an application specific integrated circuit (ASIC), a programmable logic device, or some other suitable type of hardware configured to perform a number of operations. With a programmable logic device, the device is configured to perform the number of operations. The device may be reconfigured at a later time or may be permanently configured to perform the number of operations. Examples of programmable logic devices include, for example, a programmable logic array, a programmable array logic, a field programmable logic array, a field programmable gate array, and other suitable hardware devices. With this type of implementation, program code **1218** may be omitted because the processes for the different embodiments are implemented in a hardware unit.

In still another illustrative example, processor unit **1204** may be implemented using a combination of processors found in computers and hardware units. Processor unit **1204** may have a number of hardware units and a number of processors that are configured to run program code **1218.** With this depicted example, some of the processes may be implemented in the number of hardware units, while other processes may be implemented in the number of processors.

In another example, a bus system may be used to implement communications framework **1202** and may be comprised of one or more buses, such as a system bus or an input/output bus. Of course, the bus system may be implemented using any suitable type of architecture that provides for a transfer of data between different components or devices attached to the bus system.

Additionally, a communications unit may include a number of more devices that transmit data, receive data, or transmit and receive data. A communications unit may be, for example, a modem or a network adapter, two network adapters, or some combination thereof. Further, a memory may be, for example, memory **1206** or a cache, such as found in an interface and memory controller hub that may be present in communications framework **1202.**

Thus, one or more of the different advantageous embodiments provide a method and apparatus for testing information transfer with an airport network data processing system. With an advantageous embodiment, connectivity, security, and other parameters may be emulated and tested. With one of the advantageous embodiments, this testing may be performed at the location in which the aircraft is located when communicating with an airport network data processing system. This testing may be performed without actually moving the aircraft to the location with the hardware, software, or a combination thereof to be tested.

The description of the different advantageous embodiments has been presented for purposes of illustration and description, and is not intended to be exhaustive or limited to the embodiments in the form disclosed. Many modifications and variations will be apparent to those of ordinary skill in the art. Further, different advantageous embodiments may provide different advantages as compared to other advantageous embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A mobile aircraft emulation system (114) for emulating an aircraft comprising:
communications hardware (122) configured to be suitable for use in an aircraft (110) and to establish a communications link (126) with an airport network data processing system (104);
data processing hardware (121) configured to be suitable for use in the aircraft (110) to run a number of software aircraft parts (212) and exchange information (125) with the airport network data processing system (104) using the communications link (126) and
wherein the number of software aircraft parts (212) is configured for use in the aircraft;
a mobile platform (120) configured to be suitable for carrying the communications hardware (122) and the data processing hardware(121), wherein the mobile platform (120) is selected from one of a cart, a vehicle, a truck, a suitcase, and a combination thereof;
wherein the communications hardware (122) includes at least one of a terminal wireless local area network unit (310), a crew wireless local area network unit (312), an antenna (304) for the aircraft (110).

2. The mobile aircraft emulation system (114) for emulating an aircraft of claim 1, comprising an antenna (304) configured to be suitable for the aircraft (110) carried by the mobile platform (120), wherein the antenna (304) includes a portion (306) of a structure (308) of the aircraft (110) on which the antenna (304) is to be connected.

3. The mobile aircraft emulation system (114) for emulating an aircraft of claim 1 or 2, wherein the data processing hardware (121) is configured to perform operations (210) to test functions performed by the aircraft.

4. The mobile aircraft emulation system (114) for emulating an aircraft of claim 3, wherein the operations (210) comprise at least one of sending data, receiving data, authentication with the airport network data processing system (104), communicating with a maintenance laptop, and loading software aircraft parts (212) to the aircraft (110) from the airport data processing system (104).

5. The mobile aircraft emulation system (114) for emulating an aircraft of any of the preceding claims, wherein the data processing hardware (121) is configured to record results (423) from exchanging the information (125) with the airport network data processing system (104).

6. The mobile aircraft emulation system (114) for emulating an aircraft of any of
the preceding claims,
further comprising:
a positioning system configured to place the antenna (304) in a position that substantially corresponds to a particular position of a corresponding antenna on the aircraft (110) and/or to an orientation substantially similar to when the structure is located on the aircraft.

7. A mobile communications testing system comprising the mobile aircraft emulation system (114) for emulating an aircraft of any of the preceding claims, comprising:
an antenna (304) for the aircraft (110) carried by the mobile platform (120);
a structure carried by the mobile platform (120) and positionable in an orientation substantially similar to when the structure is located on the aircraft, wherein the antenna (304) is connected to the structure such that the antenna has an orientation that substantially corresponds to a particular orientation of a corresponding antenna on the aircraft; and
wherein the communications hardware (122) is configured to emulate information of the aircraft with the airport network data processing system.

8. A method for testing operations performed with an airport network data processing system (104), the method comprising:
establishing a communications link (126) between the airport network data processing system (104) and a mobile aircraft emulation system (114) for emulating an aircraft, wherein the mobile aircraft emulation system (114) for emulating an aircraft comprises hardware configured to be suitable for use in an aircraft (110) that is used for exchanging information with the airport network data processing system (104);
performing the operations using the communications link (126) in which the operations emulate performance of the operations that would be performed by the aircraft (110);
passively identifying results from performing the operations using the communications link (126) in which the operations emulate performance of the operations that would be performed by the aircraft (110).

9. The method of claim 8, wherein the communications link (126) is established using an antenna (304) positioned to substantially correspond to a particular position for a corresponding antenna on the aircraft (110).

10. The method of claim 8 or 9, wherein the operations test functions for at least one of the aircraft (110) and the airport network data processing system (104).

11. The method of any of claims 8-10, further comprising:
placing the mobile aircraft emulation system (114) in a location at an airport in which the airport network data processing system (104) is located.

12. Method according to any of claims 8-11, wherein the mobile aircraft emulation system is a system as claimed in any of claims 1-7.

## Patentansprüche

1. Mobiles Flugzeugemulationssystem (114) zum Emulieren eines Flugzeugs, wobei das System umfasst:
Kommunikationshardware (122), die dazu konfiguriert ist, zur Verwendung in einem Flugzeug (110) geeignet zu sein und um eine Kommunikationsverbindung (126) mit einem Flughafennetzdatenverarbeitungssystem (104) aufzubauen;
Datenverarbeitungshardware (121), die dazu konfiguriert ist, zur Verwendung in dem Flugzeug (110) geeignet zu sein, um eine Anzahl von Softwareflugzeugteilen (212) zu betreiben und Informationen (125) mit dem Flughafennetzdatenverarbeitungssystem (104) mit Hilfe der Kommunikationsverbindung (126) auszutauschen,
wobei die Anzahl von Softwareflugzeugteilen (212) zu einer Verwendung in dem Flugzeug konfiguriert ist; und
eine mobile Plattform (120), die dazu konfiguriert ist, zum Tragen der Kommunikationshardware (122) und der Datenverarbeitungshardware (121) geeignet zu sein, wobei die mobile Plattform (120) ausgewählt wird aus einem der folgenden: ein Wagen, ein Fahrzeug, ein LKW, ein Koffer und eine Kombination davon;
wobei die Kommunikationshardware (122) wenigstens eine der folgenden umfasst: eine drahtlose lokale Terminal-Netzwerkeinheit (310), eine drahtlose lokale Crew-Netzwerkeinheit (312) und eine Antenne (304) für das Flugzeug (110).

2. Mobiles Flugzeugemulationssystem (114) zum Emulieren eines Flugzeugs gemäß Anspruch 1, umfassend eine Antenne (304), die dazu konfiguriert ist, für das Flugzeug (110) geeignet zu sein und von der mobilen Plattform (120) getragen wird, wobei die Antenne (304) einen Abschnitt (306) einer Struktur (308) des Flugzeugs (110) umfasst, mit dem die Antenne (304) verbunden werden soll.

3. Mobiles Flugzeugemulationssystem (114) zum Emulieren eines Flugzeugs gemäß Anspruch 1 oder 2, wobei die Datenverarbeitungshardware (121) dazu konfiguriert ist, Operationen (210) durchzuführen, um von dem Flugzeug durchgeführte Funktionen zu testen.

4. Mobiles Flugzeugemulationssystem (114) zum Emulieren eines Flugzeugs gemäß Anspruch 3, wobei die Operationen (210) umfassen: das Senden von Daten, das Empfangen von Daten, die Authentifizierung mit dem Flughafennetzdatenverarbeitungssystem (104), das Kommunizieren mit einem Wartungslaptop und/oder das Laden von Softwareflugzeugteilen (212) auf das Flugzeug (110) von dem Flughafennetzdatenverarbeitungssystem (104).

5. Mobiles Flugzeugemulationssystem (114) zum Emulieren eines Flugzeugs gemäß einem der vorangegangenen Ansprüche, wobei die Datenverarbeitungshardware (121) dazu konfiguriert ist, Ergebnisse (423) des Austauschs von Informationen (125) mit dem Flughafennetzdatenverarbeitungssystem (104) aufzunehmen.

6. Mobiles Flugzeugemulationssystem (114) zum Emulieren eines Flugzeugs gemäß einem der vorangegangenen Ansprüche, wobei das System weiterhin umfasst:
ein Positionierungssystem, das dazu konfiguriert ist, die Antenne (304) in einer Position, die im Wesentlichen mit einer bestimmten Position einer korrespondierenden, an dem Flugzeug (110) angebrachten Antenne korrespondiert, zu positionieren, und/oder zu einer Ausrichtung zu positionieren, die im Wesentlichen gleich der ist, die gegeben ist, wenn die Struktur an dem Flugzeug lokalisiert wird.

7. Mobiles Kommunikationstestsystem, das das mobile Flugzeugemulationssystem (114) zum Emulieren eines Flugzeugs gemäß einem der vorangegangenen Ansprüche umfasst, wobei das Kommunikationstestsystem umfasst:
eine Antenne (304) für das Flugzeug (110), die von der mobilen Plattform (120) getragen wird;
eine Struktur, die von der mobilen Plattform (120) getragen wird und in einer Ausrichtung, die im Wesentlichen gleich der ist, die gegeben ist, wenn die Struktur an dem Flugzeug lokalisiert wird, positioniert werden kann, wobei die Antenne (304) mit der Struktur auf eine Art und Weise verbunden ist, dass die Antenne eine Ausrichtung aufweist, die im Wesentlichen mit einer bestimmten Position einer korrespondierenden, an dem Flugzeug angebrachten Antenne korrespondiert; und
wobei die Kommunikationshardware (122) dazu konfiguriert ist, Informationen von dem Flugzeug mit dem Flughafennetzdatenverarbeitungssystem zu emulieren.

8. Verfahren zum Testen von mit einem Flughafennetzdatenverarbeitungssystem (104) durchgeführten Operationen, wobei das Verfahren umfasst:
Aufbauen einer Kommunikationsverbindung (126) zwischen dem Flughafennetzdatenverarbeitungssystem (104) und einem mobilen Flugzeugemulationssystem (114) zum Emulieren eines Flugzeugs, wobei das mobile Flugzeugemulationssystem (114) zum Emulieren eines Flugzeugs Hardware umfasst, die dazu konfiguriert ist, zur Verwendung in einem Flugzeug (110) geeignet zu sein, welches zum Austausch von Informationen mit dem Flughafennetzdatenverarbeitungssystem (104) verwendet wird;
Durchführen der Operationen mit Hilfe der Kommunikationsverbindung (126), bei der die Operationen die Durchführung der Operationen, die von dem Flugzeug (110) durchgeführt werden würden, emulieren;
Passives Identifizieren der Ergebnisse der Durchführung der Operationen mit Hilfe der Kommunikationsverbindung (126), bei der die Operationen die Durchführung der Operationen, die von dem Flugzeug (110) durchgeführt werden würden, emulieren.

9. Verfahren gemäß Anspruch 8, wobei die Kommunikationsverbindung (126) mit Hilfe einer Antenne (304) aufgebaut wird, die auf eine Art und Weise positioniert ist, dass sie im Wesentlichen mit einer bestimmten Position für eine korrespondierende, an dem Flugzeug (110) angebrachte Antenne korrespondiert.

10. Verfahren gemäß Anspruch 8 oder 9, wobei der Operationstest für das Flugzeug (110) und/oder das Flughafennetzdatenverarbeitungssystem (104) funktioniert.

11. Verfahren gemäß einem der Ansprüche 8 bis 10, das weiterhin umfasst:
Platzieren des mobilen Flugzeugemulationssystems (114) an einer Stelle an einem Flughafen, an der sich das Flughafennetzdatenverarbeitungssystem (104) befindet.

12. Verfahren gemäß einem der Ansprüche 8 bis 11, wobei es sich bei dem mobilen Flugzeugemulationssystem um ein System gemäß einem der Ansprüche 1 bis 7 handelt.

## Revendications

1. Système mobile d'émulation d'aéronef (114) permettant d'émuler un aéronef, comprenant :
du matériel de communication (122) conçu pour être approprié à une mise en oeuvre dans un aéronef (110) et pour établir une liaison de communication (126) avec un système aéroportuaire de traitement de données en réseau (104);
du matériel de traitement de données (121) conçu pour être approprié à une mise en oeuvre dans l'aéronef (110) pour actionner un certain nombre de pièces d'aéronef logicielles (212) et pour échanger des informations (125) avec le système aéroportuaire de traitement de données en réseau (104) par le biais de la liaison de communication (126),
dans lequel ledit certain nombre de pièces d'aéronef logicielles (212) est conçu pour une mise en oeuvre dans l'aéronef; et
une plate-forme mobile (120) conçue pour être appropriée à porter le matériel de communication (122) et le matériel de traitement de données (121), ladite plate-forme mobile (120) étant choisie parmi un charriot, un véhicule, un camion, une valise et une combinaison de ces derniers ;
dans lequel le matériel de communication (122) comporte au moins un élément parmi : une unité en réseau local sans fil de terminal (310), une unité en réseau local sans fil d'équipage (312) et une antenne (304) pour l'aéronef (110).

2. Système mobile d'émulation d'aéronef (114) permettant d'émuler un aéronef selon la revendication 1, comprenant une antenne (304) conçue pour être appropriée à l'aéronef (110) et portée par la plate-forme mobile (120), ladite antenne (304) comportant une partie (306) d'une structure (308) de l'aéronef (110) sur laquelle l'antenne (304) doit être raccordée.

3. Système mobile d'émulation d'aéronef (114) permettant d'émuler un aéronef selon la revendication 1 ou 2, dans lequel le matériel de traitement de données (121) est conçu pour réaliser des opérations (210) permettant de tester des fonctions réalisées par l'aéronef.

4. Système mobile d'émulation d'aéronef (114) permettant d'émuler un aéronef selon la revendication 3, dans lequel les opérations (210) comprennent au moins une opération parmi :
l'envoi de données, la réception de données, l'authentification avec le système aéroportuaire de traitement de données en réseau (104), la communication avec un ordinateur portable d'entretien et le chargement de pièces d'aéronef logicielles (212) sur de l'aéronef (110) en provenance du système aéroportuaire de traitement de données (104).

5. Système mobile d'émulation d'aéronef (114) permettant d'émuler un aéronef selon l'une quelconque des revendications précédentes, dans lequel le matériel de traitement de données (121) est conçu pour enregistrer les résultats (423) de l'échange desdites informations (125) avec le système aéroportuaire de traitement de données en réseau (104).

6. Système mobile d'émulation d'aéronef (114) permettant d'émuler un aéronef selon l'une quelconque des revendications précédentes, comprenant en outre:
un système de mise en place conçu pour placer l'antenne (304) dans une position correspondant sensiblement à une position donnée d'une antenne correspondante existant sur l'aéronef (110) et/ou à une orientation sensiblement similaire à celle existant lorsque la structure est en place sur l'aéronef.

7. Système mobile de test de communications comprenant le système mobile d'émulation d'aéronef (114) permettant d'émuler un aéronef selon l'une quelconque des revendications précédentes, comprenant:
une antenne (304) pour l'aéronef (110) portée par la plate-forme mobile (120);
une structure portée par la plate-forme mobile (120) et susceptible d'être disposée dans une orientation sensiblement similaire à celle existant lorsque la structure est en place sur l'aéronef,
ladite antenne (304) étant raccordée à la structure de manière à présenter une orientation correspondant sensiblement à une orientation donnée d'une antenne correspondante existant sur l'aéronef; et
dans lequel le matériel de communication (122) est conçu pour émuler des informations de l'aéronef avec le système aéroportuaire de traitement de données en réseau.

8. Procédé de test d'opérations réalisées au moyen d'un système aéroportuaire de traitement de données en réseau (104), ledit procédé comprenant:
l'établissement d'une liaison de communication (126) entre le système aéroportuaire de traitement de données en réseau (104) et un système mobile d'émulation d'aéronef (114) permettant d'émuler un aéronef, dans lequel le système mobile d'émulation d'aéronef (114) permettant d'émuler un aéronef comprend du matériel conçu pour être approprié à une mise en oeuvre dans un aéronef (110) servant à échanger des informations avec le système aéroportuaire de traitement de données en réseau (104);
la réalisation des opérations au moyen de la liaison de communication (126) dans laquelle les opérations émulent la réalisation des opérations censées être réalisées par l'aéronef (110);
l'identification passive des résultats issus de la réalisation des opérations au moyen de la liaison de communication (126) dans laquelle les opérations émulent la réalisation des opérations censées être réalisées par l'aéronef (110).

9. Procédé selon la revendication 8, dans lequel la liaison de communication (126) est établie au moyen d'une antenne (304) mise en place pour correspondre sensiblement à une position donnée pour une antenne correspondante existant sur l'aéronef (110).

10. Procédé selon la revendication 8 ou 9, dans lequel le test des opérations s'effectue pour au moins un des éléments suivants: l'aéronef (110) et le système aéroportuaire de traitement de données en réseau (104).

11. Procédé selon l'une quelconque des revendications 8 à 10, comprenant en outre:
la mise en place du système mobile d'émulation d'aéronef (114) sur un site aéroportuaire dans lequel le système aéroportuaire de traitement de données en réseau (104) est situé.

12. Procédé selon l'une quelconque des revendications 8 à 11, dans lequel le système mobile d'émulation d'aéronef est un système selon l'une quelconque des revendications 1 à 7.
